# EUROPEAN PATENT APPLICATION

(11) **EP 4 108 946 A1**
(43) Date of publication of application: **28.12.2022**
(21) Application number: 21757852.5
(22) Date of filing: 12.02.2021
(51) Int. Cl.: F16C 32/04, F04D 19/04

(54) **VACUUM PUMP CONTROLLER AND VACUUM PUMP**

(30) Priority: 20.02.2020 JP 2020026896
(71) Applicant: Edwards Japan Limited, Yachiyo-shi, Chiba 276-8523 (JP)
(72) Inventor: YOKOZUKA, Katsuhisa, Yachiyo-shi Chiba 276-8523 (JP); YAMAMOTO, Masayuki, Yachiyo-shi Chiba 276-8523 (JP)
(74) Representative: Openshaw & Co.
(86) International application number: PCT/JP2021/005365
(87) International publication number: WO 2021/166816

(57) **Abstract**

To obtain a vacuum pump controller which excellently operates a vacuum pump in a specific rotational frequency range, and a vacuum pump. A signal processing portion generates a current command value based on sensor signals obtained from displacement sensors which detect a displacement of a rotor shaft of the vacuum pump. A drive circuit passes a current corresponding to the current command value through each of electromagnets which adjust the displacement of the rotor shaft of the vacuum pump. In the case where a rotational frequency of the rotor shaft is in the specific rotational frequency range, a displacement limitation portion adjusts the current command value so as to limit the displacement of the rotor shaft to a displacement caused by whirling about the center of inertia.

## Description

The present invention relates to a vacuum pump controller and a vacuum pump.

In a vacuum pump such as a turbo-molecular pump, a magnetic bearing is used as a bearing of a rotor. In the magnetic bearing, a displacement is detected in a radial direction of a rotor rotating shaft by a radial sensor, a current corresponding to the displacement is passed through an electromagnet, and the displacement of the rotor rotating shaft is thereby controlled.

In a certain magnetic bearing device, (a) a coordinate system of an output signal of a radial sensor which detects a displacement of a rotating shaft of a rotor is converted from a coordinate system at rest to a rotating coordinate system, low-pass filter processing is performed on the output signal after the conversion to rotating coordinates, the coordinate system of the output signal after the low-pass filter processing is converted from the rotating coordinate system to the coordinate system at rest, and a component resulting from imbalance is thereby extracted, and (b) the extracted component is subtracted from an original output signal of the radial sensor, and the rotor is allowed to whirl about the center of inertia without suppressing the component resulting from the imbalance (see, e.g., Japanese Patent Application Publication No. 2001-27238).

However, in the magnetic bearing device described above, displacement control of the rotating shaft is performed based on the sensor output signal from which a center-of-inertia rotation component is removed, and the center-of-inertia rotation component is not controlled.

At this point, the rotor rotating shaft performs forward precession, resonance is produced in a specific rotational frequency range in which a rotational frequency of the rotor approaches an eigenfrequency in the forward precession, and the displacement of the rotating shaft of the rotor is increased.

In addition, it is conceivable to perform the displacement control of the rotating shaft so as to suppress the center-of-inertia rotation component without removing the center-of-inertia rotation component from the sensor output signal. However, in this case, it is necessary to suppress the displacement so as to cause the rotating shaft to rotate about a shape center, and passage of a large current through an electromagnet is required in order to suppress the displacement in the above manner, which is not realistic.

The present invention has been made in view of the above problem, and an object thereof is to obtain a vacuum pump controller which excellently operates a vacuum pump in a specific rotational frequency range, and a vacuum pump.

A vacuum pump controller according to the present invention includes: a signal processing portion which generates a current command value based on a sensor signal obtained from a displacement sensor which detects a displacement of a rotor shaft of a vacuum pump; a drive circuit which passes a current corresponding to the current command value through an electromagnet which adjusts the displacement of the rotor shaft of the vacuum pump; and a displacement limitation portion. In a case where a rotational frequency of the rotor shaft is in a specific rotational frequency range, the displacement limitation portion adjusts the current command value so as to limit the displacement of the rotor shaft to a displacement caused by whirling about a center of inertia.

A vacuum pump according to the present invention includes: the above-described vacuum pump controller; the above-described rotor shaft; and a magnetic bearing including the above-described displacement sensor and the above-described electromagnet.

According to the present invention, there are obtained the vacuum pump controller which excellently operates the vacuum pump in the specific rotational frequency range, and the vacuum pump.

The above and other objects, features, and advantages of the present invention will become more apparent from the following detailed description in conjunction with the accompanying drawings.
FIG. 1 is a view showing an internal configuration of a vacuum pump according to an embodiment of the present invention;
FIG. 2 is a perspective view for explaining placement of a radial bearing portion in the vacuum pump according to the embodiment of the present invention;
FIG. 3 is a block diagram showing a configuration of a controller which controls a magnetic bearing of the vacuum pump according to the embodiment of the present invention;
FIG. 4 is a block diagram showing a configuration of a center-of-inertia rotation component removal portion in FIG. 3;
FIG. 5 is a block diagram showing a configuration of a displacement limitation portion in FIG. 3;
FIG. 6 is a view for explaining change of a displacement with respect to a rotational frequency of a rotor shaft;
FIG. 7 is a view for explaining change of a displacement based on precession about the center of inertia of the rotor shaft; and
FIG. 8 is a view for explaining change of an eigenfrequency with respect to the rotational frequency corresponding to a moment-of-inertia ratio.

Hereinbelow, an embodiment of the present invention will be described based on the drawings.

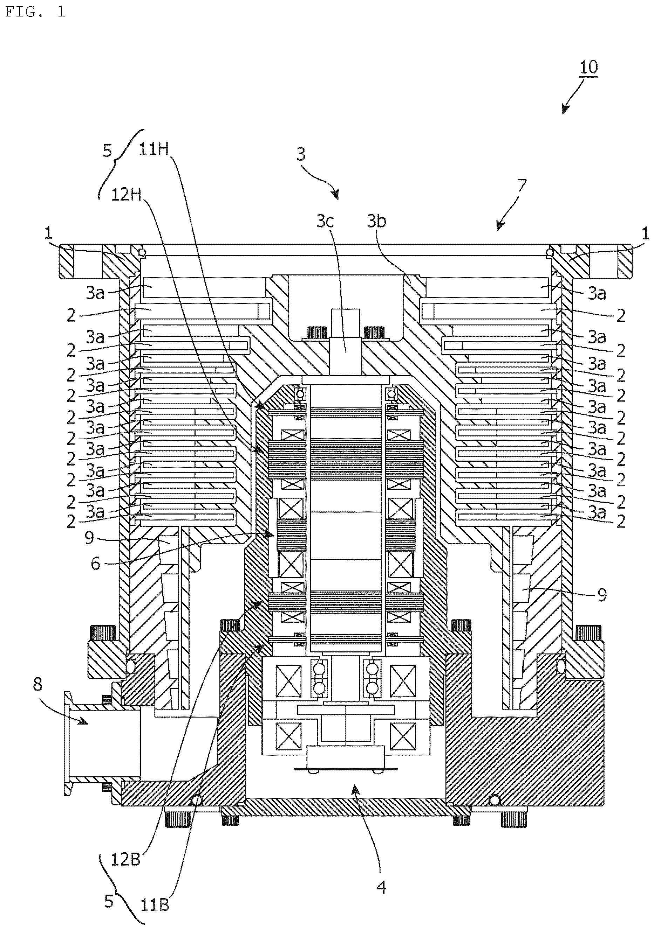

FIG. 1 is a view showing an internal configuration of a vacuum pump according to the embodiment of the present invention. The vacuum pump shown in FIG. 1 is a turbo-molecular pump, and includes, in a vacuum pump main body 10, a casing 1, stator blades 2, a rotor 3, a thrust bearing portion 4, a radial bearing portion 5, a motor portion 6, an inlet port 7, an outlet port 8, and a thread groove 9. The rotor 3 includes rotor blades 3a, a rotor inner tube portion 3b, and a rotor shaft 3c. The rotor blades 3a are connected to the rotor inner tube portion 3b, and the rotor inner tube portion 3b is connected to the rotor shaft 3c with, e.g., a screw.

The casing 1 has a substantially cylindrical shape and houses the rotor 3, the thrust bearing portion 4, the radial bearing portion 5, and the motor portion 6 in its internal space, and a plurality of tiers of the stator blades 2 are fixed to an inner peripheral surface of the casing 1. The casing 1 and the stator blades 2 constitute a stator.

Each of the thrust bearing portion 4 and the radial bearing portion 5 is a magnetic bearing of the rotor shaft 3c, and includes a displacement sensor which detects displacements of the rotor shaft 3c in an axial direction and a radial direction, and an electromagnet which controls the displacements of the rotor shaft 3c in the axial direction and the radial direction.

In particular, the radial bearing portion 5 includes a displacement sensor 11H and an electromagnet 12H at positions higher than the center of gravity of the rotor 3, and includes a displacement sensor 11B and an electromagnet 12B at positions lower than the center of gravity of the rotor 3.

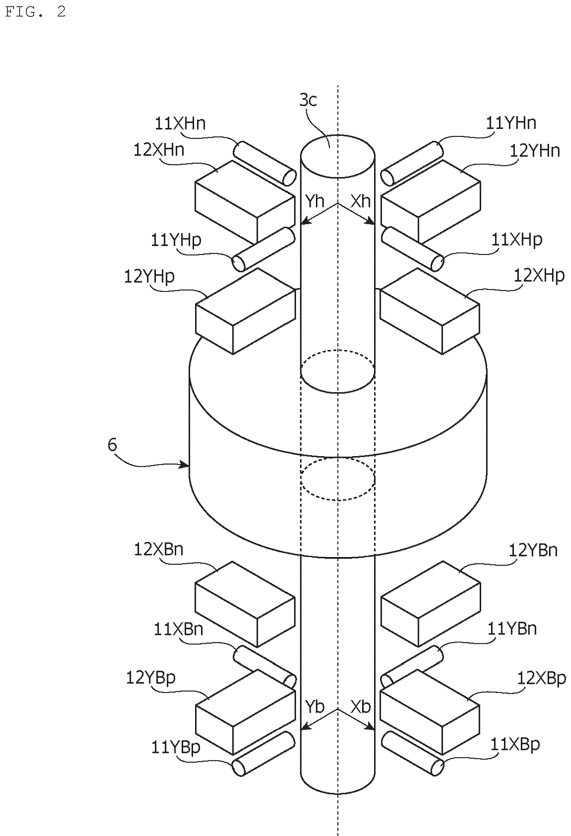

FIG. 2 is a perspective view for explaining placement of the radial bearing portion 5 in the vacuum pump according to the embodiment of the present invention.

Specifically, for example, as shown in FIG. 2, the displacement sensor 11H includes a pair of displacement sensors 11XHp and 11XHn for an Xh axis and a pair of displacement sensors 11YHp and 11YHn for a Yh axis, and the displacement sensor 11B includes a pair of displacement sensors 11XBp and 11XBn for an Xb axis and a pair of displacement sensors 11YBp and 11YBn for a Yb axis. In addition, for example, as shown in FIG. 2, the electromagnet 12H includes a pair of electromagnets 12XHp and 12XHn for the Xh axis and a pair of electromagnets 12YHp and 12YHn for the Yh axis, and the electromagnet 12B includes a pair of electromagnets 12XBp and 12XBn for the Xb axis and a pair of electromagnets 12YBp and 12YBn for the Yb axis.

With these displacement sensors 11H and 11B, a displacement Xh in an Xh axis direction and a displacement Yh in a Yh axis direction at an upper sensor position, and a displacement Xb in an Xb axis direction and a displacement Yb in a Yb axis direction at a lower sensor position are obtained.

In addition, with these electromagnets 12H and 12B, an electromagnetic force in the Xh axis direction and an electromagnetic force in the Yh axis direction, and an electromagnetic force in the Xb axis direction and an electromagnetic force in the Yb axis direction are produced, and the displacement of the rotor shaft 3c in a radial direction is controlled by the electromagnetic forces.

Returning to FIG. 1, the motor portion 6 rotates the rotor shaft 3c with an electromagnetic force. The motor portion 6 is controlled by a predetermined controller (e.g., a controller 21 described later), and a rotational frequency Q of the rotor shaft 3c (i.e., the rotor 3) is controlled. The inlet port 7 is an upper-end opening portion of the casing 1, has a flange-like shape, and is connected to a chamber which is not shown. Gas molecules come to the inlet port 7 from the chamber or the like due to thermal agitation. The outlet port 8 has a flange-like shape and exhausts gas molecules or the like.

Note that the vacuum pump shown in FIG. 1 is a composite blade vacuum pump which includes a thread groove pump portion having the thread groove 9 in a stage subsequent to a turbo-molecular pump portion having the stator blades 2 and the rotor 3 described above, but may also be a full blade vacuum pump.

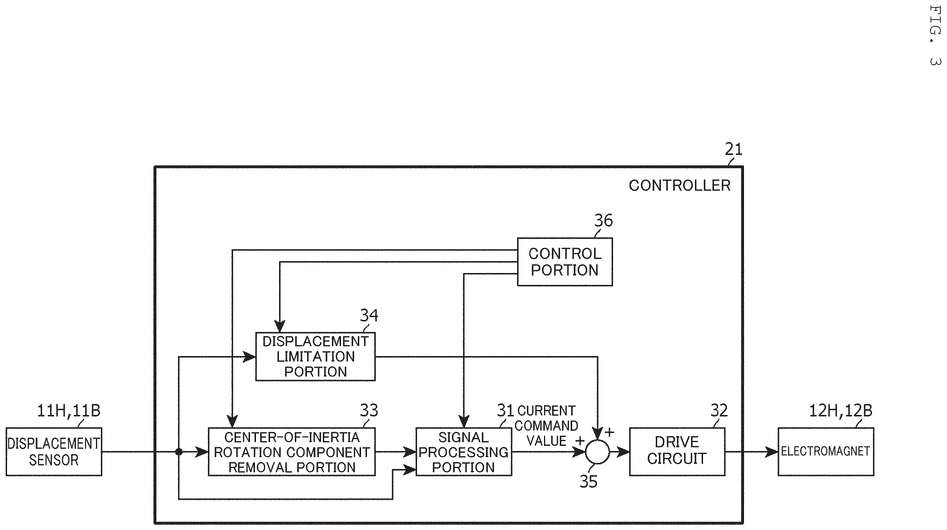

FIG. 3 is a block diagram showing a configuration of a controller which controls a magnetic bearing of the vacuum pump according to the embodiment of the present invention.

The vacuum pump according to the embodiment includes the controller 21 which electrically controls the vacuum pump main body 10. The controller 21 controls the above-described magnetic bearing (the radial bearing portion 5 or the like).

Note that the controller 21 may be incorporated in the vacuum pump, or the controller 21 may also be a device which is separate from the vacuum pump main body 10, is independent of the vacuum pump main body 10, and is attachable to and detachable from the vacuum pump main body 10.

The controller 21 includes a dedicated circuit and / or a computer, and executes various steps of processing with operations by hardware and / or software. Herein, the controller 21 includes a signal processing portion 31, a drive circuit 32, a center-of-inertia rotation component removal portion 33, a displacement limitation portion 34, an addition operation portion 35, and a control portion 36.

The signal processing portion 31 generates current command values for the electromagnets 12H and 12B based on sensor signals obtained from the displacement sensors 11H and 11B.

The drive circuit 32 passes currents corresponding to the above-described current command values through the electromagnets 12H and 12B.

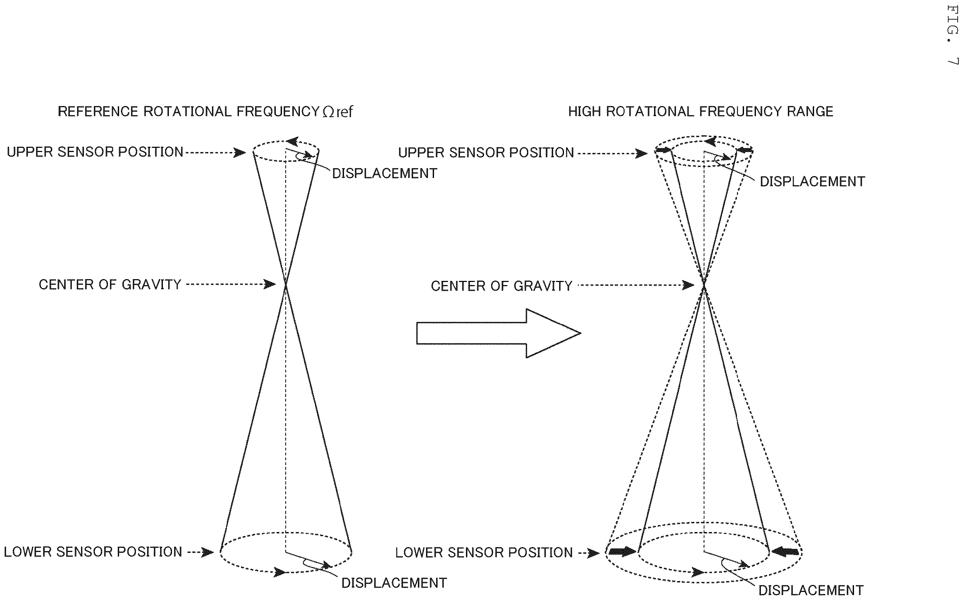

In particular, in the case where displacement control is not performed, the rotor shaft 3c tends to whirl about the center of inertia at a whirling frequency ωᵣ while rotating at the rotational frequency Ω due to forward precession. The center-of-inertia rotation component removal portion 33 removes a component resulting from the whirling about the center of inertia (center-of-inertia rotation component) from the above-described sensor signal. In a predetermined rotational frequency range of the rotor shaft 3c, the signal processing portion 31 generates the current command value so as to permit a displacement caused by the whirling about the center of inertia based on the sensor signal from which the center-of-inertia rotation component is removed by the center-of-inertia rotation component removal portion 33. In this embodiment, when the rotational frequency Ω of the rotor shaft 3c exceeds a predetermined threshold Ω1 which is lower than a lower limit value of a specific rotational frequency range described later, the center-of-inertia rotation component removal portion 33 starts removal of the center-of-inertia rotation component in the sensor signal. Specifically, when the rotational frequency Ω of the rotor shaft 3c exceeds the predetermined threshold Ω1 which is lower than the lower limit value of the specific rotational frequency range, the signal processing portion 31 generates the current command value based on the sensor signal from which the center-of-inertia rotation component is removed by the center-of-inertia rotation component removal portion 33. Note that the center of inertia mentioned herein means the center of inertia of the entire rotor 3 as shown in FIG. 7 described later and, further, it is assumed that a reference axis of a moment of inertia is an axis which passes through the center of gravity on an X-Y coordinate and the center of gravity on a Z coordinate in a coordinate system at rest in the entire rotor 3.

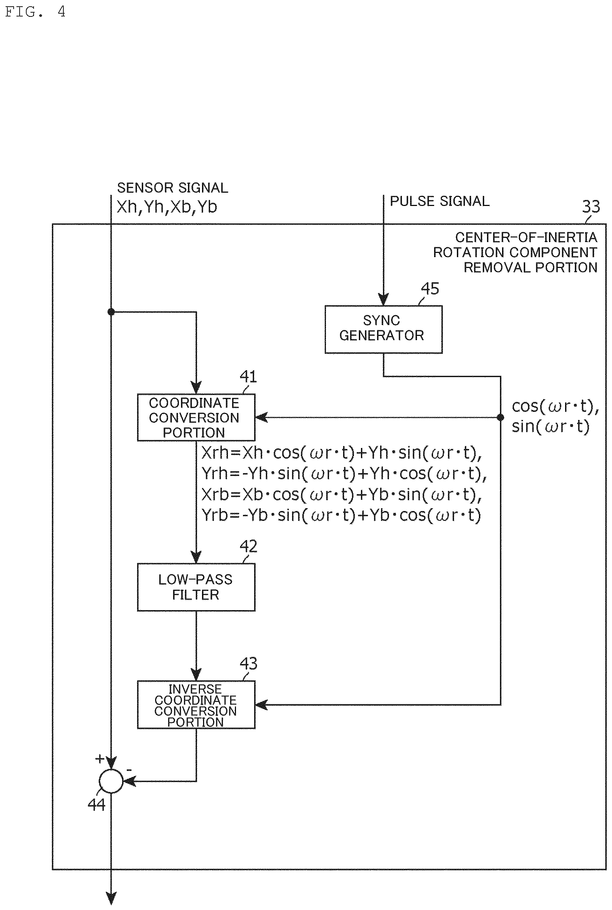

FIG. 4 is a block diagram showing a configuration of the center-of-inertia rotation component removal portion 33 in FIG. 3. For example, as shown in FIG. 4, the center-of-inertia rotation component removal portion 33 includes a coordinate conversion portion 41, a low-pass filter 42, an inverse coordinate conversion portion 43, a subtraction operation portion 44, and a sync generator 45.

The coordinate conversion portion 41 converts a coordinate system of sensor signals Xh, Yh, Xb, and Yb from the coordinate system at rest to a rotating coordinate system of a whirling rotational frequency ωᵣ of the rotor shaft 3c.

Specifically, the sensor signals Xh (upper X axis), Yh (upper Y axis), Xb (lower X axis), and Yb (lower Y axis) in the coordinate system at rest are converted to sensor signals Xrh (upper X axis), Yrh (upper Y axis), Xrb (lower X axis), and Yrb (lower Y axis) in the rotating coordinate system, as shown in FIG. 4.

The low-pass filter 42 attenuates a frequency component other than a DC component (corresponding to the whirling rotational frequency ωᵣ in the coordinate system at rest) in the sensor signals Xrh, Yrh, Xrb, and Yrb in the rotating coordinate system. The inverse coordinate conversion portion 43 converts the coordinate system of the sensor signals from the rotating coordinate system to the coordinate system at rest. That is, the coordinate conversion portion 41, the low-pass filter 42, and the inverse coordinate conversion portion 43 function as a band-pass filter which attenuates the frequency component other than the whirling rotational frequency ωᵣ in the sensor signals in the coordinate system at rest.

The whirling rotational frequency ωᵣ of the sensor signal extracted in this manner is subtracted from the original sensor signal by the subtraction operation portion 44, and a component of the whirling rotational frequency ωᵣ (i.e., the center-of-inertia rotation component)in the sensor signal is thereby removed.

The sync generator 45 generates signals sin (ωᵣ) and cos (ωᵣ) used in the coordinate conversion and the inverse coordinate conversion described above in synchronization with a rotation pulse signal synchronized with a zero-cross position in the sensor signal of each of the displacement sensors 11H and 11B with, e.g., a phase locked loop (PLL), and supplies the signals to the coordinate conversion portion 41 and the inverse coordinate conversion portion 43. Note that the rotation pulse signal is generated from an output of each of the displacement sensors 11H and 11B with a circuit which is not shown.

Returning to FIG. 3, in the case where the rotational frequency Ω of the rotor shaft 3c is in the specific rotational frequency range (a high rotational frequency range described later), the displacement limitation portion 34 adjusts the current command value so as to limit the displacement of the rotor shaft 3c to the displacement caused by the whirling about the center of inertia.

In this embodiment, (a) when the rotational frequency Ω of the rotor shaft 3c is in a middle rotational frequency range from the predetermined threshold described above to the lower limit value of the specific rotational frequency range, the displacement limitation portion 34 determines the displacement caused by the whirling about the center of inertia and stores the determined displacement in a memory or the like which is not shown and, (b) thereafter, in the case where the rotational frequency of the rotor shaft 3c falls within the above-described specific rotational frequency range, the displacement limitation portion 34 reads the displacement stored in the middle rotational frequency range from the memory or the like which is not shown, and adjusts the current command value so as to limit the displacement of the rotor shaft 3c to the read displacement.

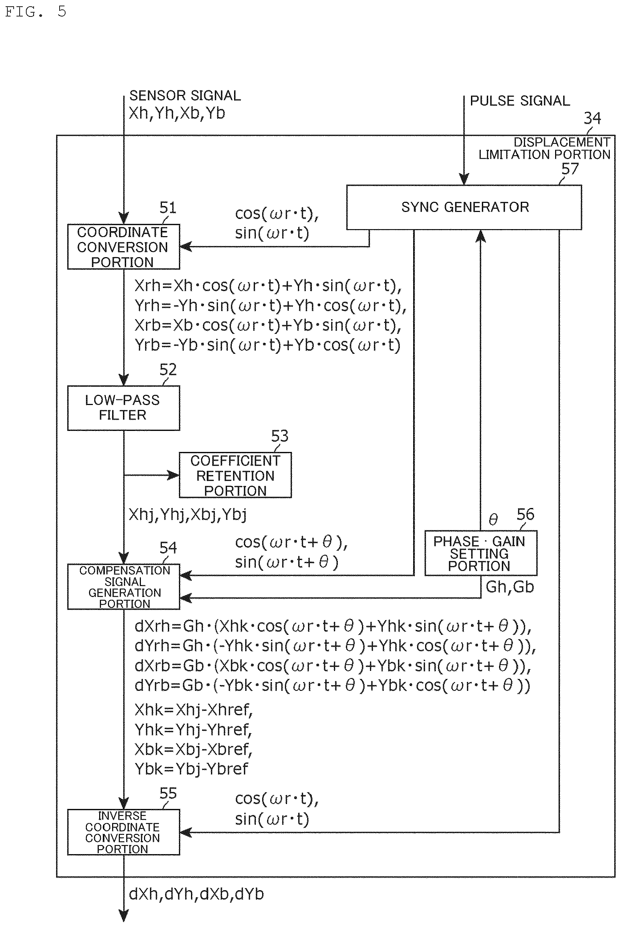

FIG. 5 is a block diagram showing a configuration of the displacement limitation portion 34 in FIG. 3. For example, as shown in FIG. 5, the displacement limitation portion 34 includes a coordinate conversion portion 51, a low-pass filter 52, a coefficient retention portion 53, a compensation signal generation portion 54, an inverse coordinate conversion portion 55, a phase · gain setting portion 56, and a sync generator 57.

The coordinate conversion portion 51, the low-pass filter 52, the inverse coordinate conversion portion 55, and the sync generator 57 are similar to the coordinate conversion portion 41, the low-pass filter 42, the inverse coordinate conversion portion 43, and the sync generator 45 in the center-of-inertia rotation component removal portion 33 shown in FIG. 4. Without providing the coordinate conversion portion 51 and the low-pass filter 52 separately, the coordinate conversion portion 41 and the low-pass filter 42 may be used instead.

The coefficient retention portion 53 stores coefficients (i.e., coefficients representing a magnitude of the present whirling rotational frequency ωᵣ) Xhj (upper X axis), Yhj (upper Y axis), Xbj (lower X axis), and Ybj (lower Y axis) which are output from the low-pass filter 52 at a given rotational frequency Ωref as reference values Xhref, Yhref, Xbref, and Ybref in a memory or the like which is not shown.

The compensation signal generation portion 54 generates compensation signals dXrh, dXrh, dXrh, and dXrh corresponding to differences between the present coefficients Xhj, Yhj, Xbj, and Ybj and the reference values Xhref, Yhref, Xbref, and Ybref, a phase θ, and gains Gh (upper) and Gb (lower), as shown in FIG. 5. Note that the phase θ and the gains Gh and Gb are set to predetermined values by the phase · gain setting portion 56.

In the case where the displacement by the present rotational frequency Ω is larger than the displacement at the time of the rotational frequency ωᵣ for which the reference values Xhref, Yhref, Xbref, and Ybref are retained, the compensation signal generation portion 54 generates the compensation signals dXrh, dXrh, dXrh, and dXrh which limit the present displacement to the displacement at the time of the rotational frequency Ωref for which the reference values Xhref, Yhref, Xbref, and Ybref are retained. Consequently, in the case where the displacement by the present rotational frequency Ω matches the displacement at the time of the rotational frequency Ωref for which the reference values Xhref, Yhref, Xbref, and Ybref are retained, the value of each of the compensation signals dXrh, dYrh, dXrb, and dYrb is set to zero.

The coordinate system of the compensation signals dXrh, dYrh, dXrb, and dYrb is converted from the rotating coordinate system to the coordinate system at rest by the inverse coordinate conversion portion 55, and compensation signals dXh, dYh, dXb, and dYb in the coordinate system at rest are generated as output values of the displacement limitation portion 34.

Similarly to the sync generator 45, the sync generator 57 generates signals sin (ωᵣ) and cos (ωᵣ), and also generates signals sin (ωᵣ + θ) and cos (ωᵣ + θ) corresponding to the phase θ.

Returning to FIG. 3, the addition operation portion 35 adds the output value of the displacement limitation portion 34 to the current command value output from the signal processing portion 31.

The control portion 36 supplies a setting and a command for each portion described above in the controller 21.

Next, an operation of the vacuum pump described above will be described.

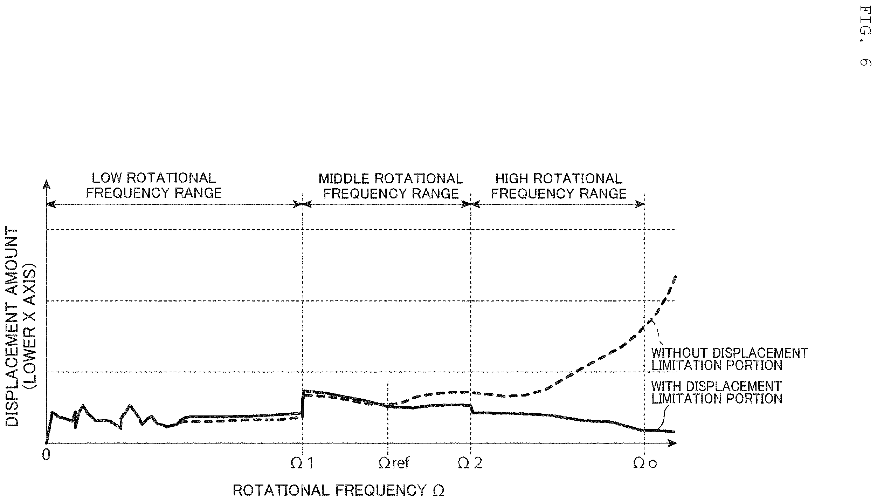

FIG. 6 is a view for explaining change of a displacement with respect to the rotational frequency Ω of the rotor shaft. FIG. 7 is a view for explaining change of a displacement based on precession about the center of inertia of the rotor shaft.

In this embodiment, when the vacuum pump is activated, in the case where the rotational frequency Ω of the rotor 3 is increased from zero to a rated rotational frequency Ωo, in a low rotational frequency range in which rotation of the rotor 3 is not stable, the signal processing portion 31 generates the current command value such that a displacement based on the sensor signal is caused to approach zero with PID control by using the sensor signal from which the center-of-inertia rotation component is not removed. In this low rotational frequency range, the displacement limitation portion 34 does not output the compensation signal or outputs the compensation signal having a value of zero. That is, in the low rotational frequency range, displacement limitation is not performed.

Thereafter, the rotational frequency Ω rises and reaches a first threshold frequency Ω1. In a middle rotational frequency range from the first threshold frequency Ω1 to a second threshold frequency Ω2 and in the high rotational frequency range (the above-described specific rotational frequency range) from the second threshold frequency Ω2 to the rated rotational frequency Ωο, the signal processing portion 31 generates the current command value such that a displacement component other than the center-of-inertia rotation component based on the sensor signal is caused to approach zero with the PID control by using the sensor signal from which the center-of-inertia rotation component is removed (i.e., the center-of-inertia rotation component is permitted). In the middle rotational frequency range, the displacement limitation portion 34 does not output the compensation signal or outputs the compensation signal having a value of zero. That is, in the middle rotational frequency range, the displacement limitation is not performed.

Subsequently, when the rotational frequency Ω becomes equal to a predetermined reference rotational frequency Ωref in the middle rotational frequency range, the displacement limitation portion 34 retains the above-described coefficients Xhj, Yhj, Xbj, and Ybj which represent the present center-of-inertia rotation component as the reference values Xhref, Yhref, Xbref, and Ybref.

Thereafter, when the rotational frequency Ω further rises and reaches the second threshold frequency Ω2, the displacement limitation portion 34 starts the output of the above-described compensation signal. With this, in the high rotational frequency range, the current command value output from the signal processing portion 31 is adjusted with this compensation signal and, as shown in FIG. 7, the displacement of the whirling of the rotor shaft 3c is controlled so as to match the displacement of the whirling at the time of the reference rotational frequency Ωref.

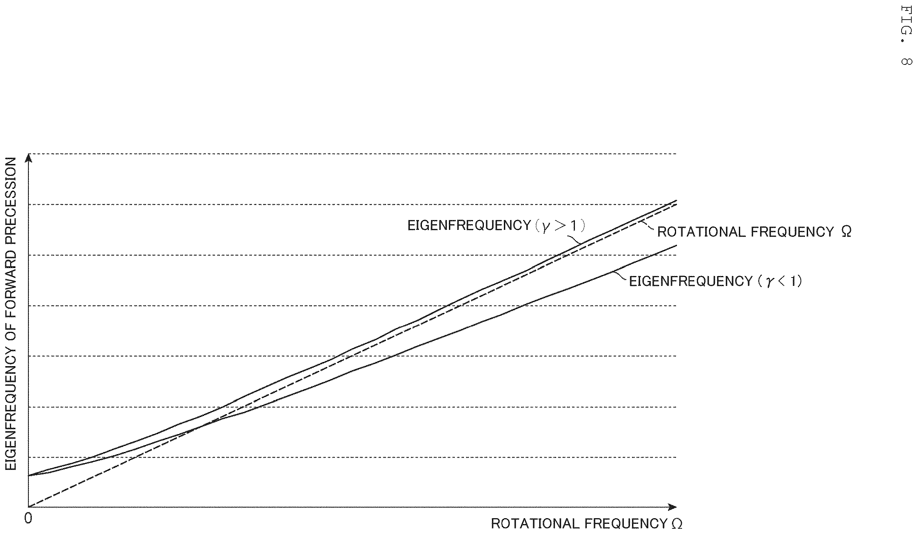

FIG. 8 is a view for explaining change of an eigenfrequency with respect to the rotational frequency corresponding to a moment-of-inertia ratio (gyro-factor).

The rotor 3 performs forward precession and, as shown in FIG. 8, when a moment-of-inertia ratio γ (a ratio between a moment of inertia Iz in an axial direction and a moment of inertia Ir in a radial direction, Iz / Ir) is less than 1, a dangerous speed (the rotational frequency Ω matching the eigenfrequency) is reached at a relatively low speed, and hence it is possible to suppress the displacement of the rotor shaft 3c with control or the like. However, when the moment-of-inertia ratio γ approaches 1, the dangerous speed is gradually increased. When the moment-of-inertia ratio γ becomes equal to 1, the dangerous speed disappears, and the eigenfrequency gradually approaches the rotational frequency in response to an increase of the rotational frequency. Consequently, in the high rotational frequency range including the rated rotational frequency, the rotational frequency becomes close to the eigenfrequency and, in the case where the above-described displacement limitation portion 34 (i.e., the compensation signal) is not used, a whirling displacement increases from the displacement of the whirling about the center of inertia, as shown in FIG. 6.

If it is intended to suppress the whirling displacement to zero in the high rotational frequency range, the rotor 3 rotates at high speed in the high rotational frequency range, and hence it is necessary to pass a large current through each of the electromagnets 12H and 12B. However, an allowable current value of a device may be exceeded and noise is caused, and hence the passage of the large current through each of the electromagnets 12H and 12B is not realistic. In this embodiment, an increase of the whirling displacement is suppressed to about a level of the displacement by the center-of-inertia rotation component with the above-described compensation signal, and it is possible to operate the vacuum pump without causing a value of the current passed through each of the electromagnets 12H and 12B to exceed the allowable current value of the device.

In this embodiment, the above-described high rotational frequency range (the specific rotational frequency range), i.e., the second threshold frequency Ω2 is set so as to correspond to the moment-of-inertia ratio γ of the rotor 3. In this embodiment, the moment-of-inertia ratio γ of the rotor 3 has a value with which a difference between the rated rotational frequency Ωo and the eigenfrequency at the rated rotational frequency Ωo of the rotor 3 has a predetermined value or less, and the moment-of-inertia ratio γ thereof has, e.g., a value of not less than 0.8 and not more than 1, or a value of not less than 1. That is, as described above, the rotor 3 has the moment-of-inertia ratio γ which increases the whirling displacement in the high rotational frequency range. Even with such a rotor 3, the displacement of the whirling in the high rotational frequency range is suppressed to the displacement caused by the center-of-inertia rotation component with the above-described compensation signal.

Thus, according to the embodiment described above, the signal processing portion 31 generates the current command value based on the sensor signals obtained from the displacement sensors 11H and 11B which detect the displacement of the rotor shaft 3c of the vacuum pump. The drive circuit 32 passes the current corresponding to the current command value through each of the electromagnets 12H and 12B which adjust the displacement of the rotor shaft 3c of the vacuum pump. In the case where the rotational frequency Ω of the rotor shaft 3c is in the specific rotational frequency range, the displacement limitation portion 34 adjusts the current command value so as to limit the displacement of the rotor shaft 3c to the displacement caused by the whirling about the center of inertia.

With this, the displacement caused by the whirling of the rotor shaft 3c is moderately suppressed without needing a large current, and hence it is possible to excellently operate the vacuum pump in the specific rotational frequency range.

Note that various changes and modifications to the above-described embodiment are obvious to those skilled in the art. These changes and modifications may be made without departing from the gist and the scope of the subject matter and without degrading intended advantages. That is, these changes and modifications are intended to be included in the scope of claims.

The present invention can be applied to, e.g., the vacuum pump.

- 3: Rotor
- 5: Radial bearing portion (an example of a magnetic bearing)
- 11B, 11H: Displacement sensor
- 12B, 12H: Electromagnet
- 21: Controller (an example of a vacuum pump controller)
- 31: Signal processing portion
- 32: Drive circuit
- 33: Center-of-inertia rotation component removal portion
- 34: Displacement limitation portion

## Claims

1. A vacuum pump controller which controls a magnetic bearing of a vacuum pump, the vacuum pump controller comprising:
a signal processing portion which generates a current command value based on a sensor signal obtained from a displacement sensor which detects a displacement of a rotor shaft of the vacuum pump;
a drive circuit which passes a current corresponding to the current command value through an electromagnet which adjusts the displacement of the rotor shaft; and
a displacement limitation portion, wherein
in a case where a rotational frequency of the rotor shaft is in a specific rotational frequency range, the displacement limitation portion adjusts the current command value so as to limit the displacement of the rotor shaft to a displacement caused by whirling about a center of inertia.

2. The vacuum pump controller according to claim 1, further comprising:
a center-of-inertia rotation component removal portion which removes a component resulting from the whirling about the center of inertia as a center-of-inertia rotation component from the sensor signal, wherein
the signal processing portion generates the current command value so as to permit the displacement caused by the whirling about the center of inertia based on the sensor signal from which the center-of-inertia rotation component is removed by the center-of-inertia rotation component removal portion in the specific rotational frequency range.

3. The vacuum pump controller according to claim 2, wherein
the center-of-inertia rotation component removal portion starts removal of the center-of-inertia rotation component in the sensor signal when the rotational frequency of the rotor shaft exceeds a predetermined threshold which is lower than a lower limit value of the specific rotational frequency range, and
the displacement limitation portion (a) determines and stores the displacement caused by the whirling about the center of inertia when the rotational frequency of the rotor shaft is in a middle rotational frequency range from the predetermined threshold to the lower limit value of the specific rotational frequency range, and (b) starts adjustment of the current command value which limits the displacement of the rotor shaft to the displacement caused by the whirling about the center of inertia stored in the middle rotational frequency range when the rotational frequency of the rotor shaft falls within the specific rotational frequency range.

4. The vacuum pump controller according to any one of claims 1 to 3, wherein
the specific rotational frequency range is set so as to correspond to a moment-of-inertia ratio of a rotor of the vacuum pump, and
the moment-of-inertia ratio has a value with which a difference between a rated rotational frequency and an eigenfrequency of the rotor at the rated rotational frequency of the rotor has a predetermined value or less, and which is not less than 0.8.

5. A vacuum pump comprising:
the vacuum pump controller according to any one of claims 1 to 4;
the rotor shaft; and
the magnetic bearing including the displacement sensor and the electromagnet.
